# EUROPÄISCHE PATENTANMELDUNG

(11) **EP 1 312 252 A1**
(43) Veröffentlichungstag der Anmeldung: **21.05.2003**
(21) Anmeldenummer: 02024071.9
(22) Anmeldetag: 29.10.2002
(51) Int. Cl.: A01D 82/00, A01D 43/10

(54) **Mäh- und Aufbereitungsgerät**

(30) Priorität: 17.11.2001 DE 10156634
(71) Anmelder: DEERE & COMPANY, Moline, Illinois 61265-8098 (US)
(72) Erfinder: Carlot, Philippe, 21170 Trouhans (FR); Delmas, Jean, 70100 Rigny (FR)
(74) Vertreter: Magin, Ludwig Bernhard

(57) **Zusammenfassung**

2.1. Bekannte Mäh- und Aufbereitungsgeräte weisen am Ende eines Auslassleitelements einen Abweiser auf, der um eine Achse schwenkbar ist und somit die Breite eines Schwades verändern kann.
2.2. Es wird ein Abweiser (20) vorgeschlagen, der einen Schlitz (36) enthält, während in dem Auslassleitelement (24) wenigstens ein weiterer Schlitz (40, 42) vorgesehen ist, die miteinander in Deckung bringbar sind und der Aufnahme gemeinsamer Feststellelemente (44, 46) dienen. Eine solche Verwendung von Schlitzen (36, 40, 42) macht es möglich, den Abweiser (20) in unendlich vielen Stellungen festzustellen.
2.3. Mäh- und Aufbereitungsgeräte werden in der Landwirtschaft eingesetzt.

## Beschreibung

Die Erfindung betrifft ein Mäh- und/oder Aufbereitungsgerät mit einem Auslassleitelement und einem Abweiser, der in einen von dem Auslassleitelement begrenzten Auslasskanal einbringbar ist.

Die EP-A1-1 008 290 offenbart einen Mähschlagzetter mit einem Gehäuse, in dem ein quer zu dem Gutfluss ausgerichteter Rotor dreht und in dessen Auslassbereich ein Abweiser vorgesehen ist. Dieser Abweiser ist in der Form eines "U" mit einem Lagerschenkel versehen, der oberhalb des Gehäuses in einem Lager vertikal schwenkbar aufgenommen ist. Ein an dem Abweiser vorgesehenes Flächenelement kann parallel oder im wesentlichen senkrecht zu der Unterseite des Gehäusedeckels ausgerichtet werden. Zudem kann das Flächenelement auch vollkommen aus dem Gutstrom herausgeschwenkt werden, was funktional allerdings der Lage parallel zu der Unterseite des Gehäusedeckels gleichkommt.

Aus der US-A-3,224,177 geht ein Mähknickzetter hervor, in dessen Auslaß ebenfalls ein Abweiser vorgesehen ist, der um eine horizontale Achse schwenkbar ist. In jeder Seitenwand des Auslassleitelements ist eine Schraube vorgesehen, die sich durch einen Schlitz in einer Seitenwand des Abweisers erstreckt und somit den Abweiser in verschiedenen vertikalen Stellungen festlegen kann.

Das der Erfindung zugrunde liegende Problem wird darin gesehen, daß die bekannten Verstellmöglichkeiten für heutige Anforderungen nicht ausreichen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Abweiser in mehr als nur einer Richtung verstellt werden, wobei die Verstellmöglichkeiten durch die Lage und Form der Schlitze beeinflussbar sind. Die Schlitze können auch in der Form von Nuten oder sonstigen Gleitführungen ausgebildet sein, so daß sich jedenfalls jeweils eine Führungsbahn ergibt. Der Abweiser kann in sich starr, z. B. als Blech, ausgebildet sein oder ein festes Tuch enthalten, das sich zwischen zwei Haltern erstreckt. Als Feststellelement kommt sowohl eine einfache Schraube, als auch eine Kniehebelklemme in Betracht, mit denen es möglich ist, den Abweiser an dem Auslassleitelement form- oder reibschlüssig festzulegen. Das Auslassleitelement besteht in der einfachsten Form aus einem im wesentlichen ebenen Blech und ansonsten aus einem z. B. U-förmigen Kanal. Mähgeräte können gemähtes Gut direkt hinter sich auf den Boden werfen oder es einem Aufbereitungsgerät zuführen, von wo aus es auf den Boden gelangt. Andererseits kann auch ein Aufbereitungsgerät alleine betrieben werden, das bereits gemähtes Gut vom Boden anhebt, es bearbeitet, z. B. knickt, und dann ablegt. In beiden Fällen wird der Abweiser in den Gutstrom eintreten und diesen in größerer oder schmälerer Breite ablenken.

Die Verwendung eines zweiten Schlitzes an dem Auslassleitelement oder dem Abweiser, d. h. die Verwendung von insgesamt drei Schlitzen, erhöht die Verstellmöglichkeiten. Insbesondere kann der Abweiser nunmehr auch tordiert oder schräg gestellt werden und lenkt somit den Strom des abgegebenen Guts. Verläuft die Endkante des Abweisers parallel zu einer Leitfläche des Auslassleitelements, wird auch das Auswurfgut z. B. gleichmäßig zum Boden abgelegt. Wird der Abweiser tordiert oder schräg gestellt, dann lenkt eine Endkante des Abweisers das Gut ungleichmäßig ab, z. B. nach links oder rechts, bzw. stärker oder schwächer nach oben oder nach unten.

Der Vorteil einer glatten Begrenzung eines Schlitzes liegt darin, daß das Feststellelement und mit ihm der Abweiser stufenlos und ohne Widerstand in bzw. gegenüber dem Schlitz bewegt werden kann. Somit ist eine unendliche Zahl von Abweiserstellungen möglich. Der Vorteil von Ausnehmungen, z. B. kleinen Buchten oder Nischen ist darin zu sehen, daß vorteilhafte Stellungen leicht wiedergefunden werden und daß die Feststellelemente den Abweiser an dem Auslassleitelement nicht nur mit Reibkräften festlegen müssen, sondern auch Formschlusskräfte wirken.

Eine senkrechte Ausrichtung der Schlitze zueinander bringt die größten Verstellmöglichkeiten, da eine Verstellung in zwei Richtungen möglich ist. Außerdem werden von außen einwirkende Kräfte in einer Richtung an einer Wandung formschlüssig abgestützt.

Da ein Abweiser hauptsächlich in den Gutstrom eintauchen können muß, ist es von Vorteil, wenn die Verstellbarkeit in dieser Richtung aufgrund eines relativ langen Schlitzes möglich ist. Hingegen reicht ein kurzer Schlitz und somit auch wenig Material zur Aufnahme des Schlitzes in einer Verstellrichtung auf, die nur einer geringfügigen Verstellung des Abweisers dient, z. B. zur Verstellung der Neigung.

Ein dreieckiger, z. B. auch L-förmiger Schlitzträger als Platte oder Profilmaterial stellt einen optimalen Materialeinsatz zum Aufnehmen zweier Schlitze dar. Ein solcher z. B. ausgestanzter Schlitzträger kann an jeder Seite des Auslassleitelements vorgesehen werden.

Wenn der Schlitzträger länger ist als die Höhe bzw. Breite des Abweisers, kann das Flächenelement aus dem Gutstrombereich gebracht werden, während sich der andere Schlitzträger noch seitlich des Gutstroms befinden kann.

Die Ausbildung des Abweisers aus einem Stück führt zu geringen Fertigungskosten, da die entsprechende Formgebung in einer Stanzpresse erfolgen kann.

In der Zeichnung ist ein nachfolgend näher beschriebenes Ausführungsbeispiel der Erfindung dargestellt. Es zeigt:
- Fig. 1: ein Mäh- und Aufbereitungsgerät mit einem Auslassleitelement und einem Abweiser in Seitenansicht und schematischer Darstellung,
- Fig. 2: das Auslassleitelement und den Abweiser in Seitenansicht und in einer ersten Stellung, einer Außerbetriebsstellung,
- Fig. 3: das Auslassleitelement und den Abweiser in Seitenansicht und in einer zweiten Stellung, einer Betriebsstellung mit geringer Ablenkung,
- Fig. 4: das Auslassleitelement und den Abweiser in Seitenansicht und in einer dritten Stellung, einer Betriebsstellung mit maximaler Ablenkung, die zu einem breiten Schwad führt,
- Fig. 5: das Auslassleitelement und den Abweiser in Seitenansicht und in einer vierten, tordierten Stellung, einer Betriebsstellung mit teilweiser Ablenkung, die den Gutstrom auf einer Seite stärker ablenkt als auf der anderen, in Seitenansicht,
- Fig. 6: das Auslassleitelement und den Abweiser aus Figur 5 in perspektivischer Darstellung, und
- Fig. 7: das Auslassleitelement und den Abweiser in Seitenansicht und in einer fünften, schräggestellten Stellung, einer Betriebsstellung, in perspektivischer Darstellung.

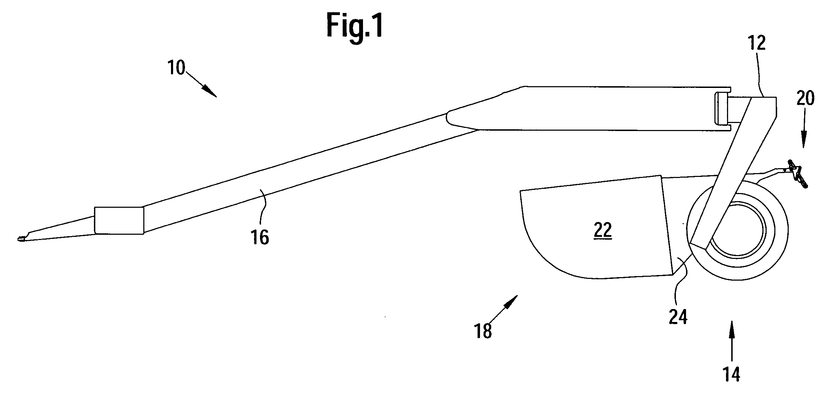

Figur 1 zeigt ein Mäh- und Aufbereitungsgerät 10 mit einem Rahmen 12, einem Fahrwerk 14, einer Deichsel 16, einer Mäh- und Aufbereitungsvorrichtung 18 und einem Abweiser 20.

Das Mäh- und Aufbereitungsgerät 10 ist als ein gezogenes dargestellt, kann ebenso aber auch an ein Zugfahrzeug angebaut oder Teil eines Selbstfahrers sein. Die Aufgabe des Mäh- und Aufbereitungsgeräts 10 besteht darin, auf dem Boden stehendes Gut zu mähen, zu bearbeiten und nach hinten in einem Schwad auf dem Boden abzulegen.

Der Rahmen 12 ist herkömmlicherweise als ein auf dem Kopf stehendes "U" ausgebildet, stützt sich auf dem Fahrwerk 14 ab, trägt die Mäh- und Aufbereitungsvorrichtung 18 und ist über die Deichsel 16 mit einem nicht gezeigten Zugfahrzeug verbunden.

Das Fahrwerk 14 besteht in einfacher Weise aus einem nicht näher bezeichneten Rad je Seite, das über jeweils nicht gezeigte Schwingen und Stellmotoren an dem Rahmen 12 aufgehängt ist.

Die Deichsel 16 dient dem Anschluß des Rahmens 12 an das Zugfahrzeug und erstreckt sich bis weit vor die Mäh- und Aufbereitungsvorrichtung 18.

Die Mäh- und Aufbereitungsvorrichtung 18 enthält in nicht gezeigter aber hinlänglich bekannter Weise ein Mähwerk und eine diesem stromabwärts folgende Aufbereitungsvorrichtung in der Form eines um eine horizontale Achse drehenden Rotors, die in einem Gehäuse 22 aufgenommen sind, an das sich ein Auslassleitelement 24 anschließt. Der Rotor fördert das gemähte und aufbereitete Gut oberschlächtig nach hinten, d. h. in Figur 1 rechts, wo es entlang der Innenflächen des Auslassleitelements 24 bis zu dem Abweiser 20 geführt wird.

Der Abweiser 20 ist in dem Auslassbereich des Auslassleitelements 24 vorgesehen und enthält ein Flächenelement 30 und auf jeder Seite einen Schlitzträger 32.

Der Abweiser 20 dient dazu, die Lage des Guts in einem Schwad auf dem Boden bzw. dessen Abwurfrichtung zu steuern. So kann beispielsweise ein breites Schwad erzeugt werden, indem das Flächenelement 30 den Gutstrom in einem Bereich ablenkt, in dem die Seitenwände 28 einen großen Abstand einhalten. Ein schmales Schwad hingegen wird erzeugt, indem das Flächenelement 30 den Gutstrom nicht behindert und ihn entlang der aufeinanderzulaufenden Seitenwände 28 gleiten lässt. Wenn auf die Mäh- und Aufbereitungsvorrichtung eine Schwadablegevorrichtung, z. B. mit einem seitwärts fördernden Band, folgt, das sich schräg zu der Fortbewegungsrichtung des Mäh- und Aufbereitungsgeräts 10 erstreckt, kann mit einer entsprechenden Ausrichtung des Abweisers 20 auch erreicht werden, daß das Gut einerseits früher und andererseits später abgelenkt wird, so daß es auf der gesamten Länge des Bands in dessen Mittenbereich auftreffen kann.

Das Flächenelement 30 ist als ein Blech ausgebildet, könnte aber auch aus einem Kunststoff oder Gummi oder ähnlichem bestehen. An einer der quer zum Gutstrom verlaufenden Kanten ist eine Abkantung um neunzig Grad vorgesehen, die für eine ausreichende Biegesteifigkeit sorgt. Das Flächenelement 30 erstreckt sich über die gesamte endseitige Breite eines zwischen den Seitenwänden 28 gebildeten, sich verjüngenden Auslasskanals 34. Das Flächenelement 30 kann mit Sicken, Rippen oder dergleichen versehen sein, die ihm weitere Steifigkeit verleihen. Daneben können an seiner Leitseite auch zusätzliche Leitelemente vorgesehen werden.

Die Schlitzträger 32 sind als Flachstege ausgebildet, die sich in einem Winkel von ca. neunzig Grad zu dem Flächenelement 30 erstrecken und an diesem befestigt sind. Die Schlitzträger 32 ragen an beiden Seiten über das Flächenelement 30 hinaus, und zwar auf einer Seite mehr als auf der anderen. In jedem der Schlitzträger 32 ist ein gerader erster Schlitz 36 vorgesehen, der parallel zu der Fläche des Flächenelements 30 verläuft.

In diesem Ausführungsbeispiel sind das Flächenelement 30 und die Schlitzträger 32 als ein einziger Teil ausgebildet, der aus einer entsprechend gestanzten und abgekanteten Blechplatte gebildet ist. Alternativ könnten diese Teile auch verschraubt oder verschweißt sein. Grob gesprochen nimmt der Abweiser 20 die Form eines "H" ein, wobei das Flächenelement 30 den Quersteg bildet.

Das Auslassleitelement 24 ist in der Form eines nach unten offenen U-förmigen Blechkanals ausgebildet und enthält eine Decke 26 und zwei Seitenwände 28, wobei sich in diesem speziellen Ausführungsbeispiel die Decke 26 nach hinten über die Seitenwände 28 hinaus erstreckt. Die Seitenwände 28 konvergieren von der Mäh- und Aufbereitungsvorrichtung 18 zu dem Auslassende hin. Im rückwärtigen Endbereich der Decke 26 ist auf jeder Seite ein weiterer Schlitzträger 38 vorgesehen.

Der weitere Schlitzträger 38 ist in der Form eines Dreiecks gehalten, das aus einem stabilen aber dennoch nachgiebigen Blech gestanzt ist. Die weiteren Schlitzträger 38 sind mit der Decke 26 und/oder der jeweiligen Seitenwand 28 verbunden und erstrecken sich jeweils vertikal; die Verbindung erfolgt in einfacher Form mittels einer Schraubverbindung. In dem Schlitzträger 38 sind zwei ebenfalls geradlinig verlaufende zweite und dritte Schlitze 40 und 42 vorgesehen. Der Schlitz 40 verläuft im montierten Zustand des Schlitzträgers 38 nahezu senkrecht, jedoch leicht geneigt, und ist relativ lang. Der Schlitz 42 verläuft waagrecht entlang der oberen Kante des Schlitzträgers 38 und ist relativ kurz. Beide Schlitze 40, 42 sind voneinander getrennt. Die beiden Schlitzträger 38 sind parallel zueinander angeordnet und nehmen zwischen sich den Abweiser 20 auf.

Schließlich sind Feststellelemente 44 und 46 vorgesehen, die sich einmal durch den ersten und den zweiten Schlitz 36 und 40 und einmal durch den ersten und den dritten Schlitz 36 und 42 erstrecken. Die Feststellelemente 44, 46 enthalten Schrauben, Muttern und Unterlegscheiben, die geeignet sind, die Schlitzträger 32, 38 unverrückbar aneinander anzulegen.

Aus der obigen Beschreibung ergibt sich folgender Zusammenbau und folgende Funktion.

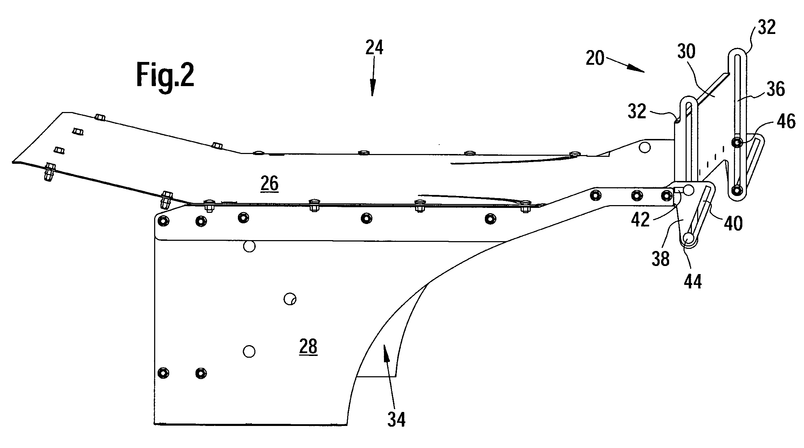

Der Abweiser 20 wird zwischen den beiden senkrechten Schlitzträgern 38 derart positioniert, daß sich der erste Schlitz 36 in dem Schlitzträger 32 des Abweisers 20 sowohl mit dem zweiten als auch dem dritten Schlitz 40, 42 des Schlitzträgers 38 an dem Auslassleitelement 24 überschneidet. Sobald dies erfolgt ist, werden die Feststellelemente 44 und 46 hindurchgesteckt und angezogen. In den Figuren 2 bis 7 sind fünf unterschiedliche Stellungen des Abweisers 20 dargestellt, die aufgrund der Verwendung mehrerer Schlitze 36, 40, 42 möglich sind.

So zeigt Figur 2 eine Ausrichtung, bei der sich das Flächenelement 30 vertikal oberhalb der Decke 26 erstreckt und den Gutstrom nicht berührt. In dieser Stellung befindet sich das obere Stellelement 46 an dem rückwärtigen und das untere Stellelement 44 an dem untern Ende des Schlitzes 42 bzw. 40. Ebenso liegt das untere Stellelement 44 an dem unteren Ende des ersten Schlitzes 36 des Abweisers 20 an.

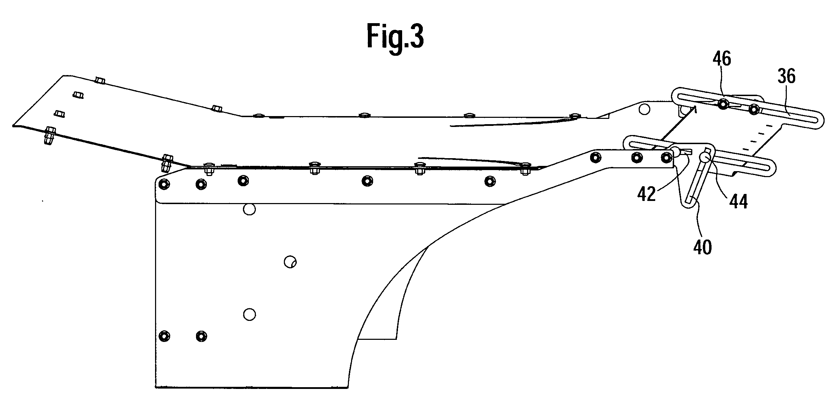

In Figur 3 ist eine Stellung dargestellt, in der sich die Feststellelemente 44, 46 an oder nahe der gegenüberliegenden Enden des zweiten und des dritten Schlitzes 40 und 42 befinden, während sie in dem ersten Schlitz 36 nahezu mittig positioniert sind. Das Flächenelement 30 nimmt nunmehr eine gering nach unten geneigte Stellung ein, in der das Gut nur geringfügig abgelenkt wird.

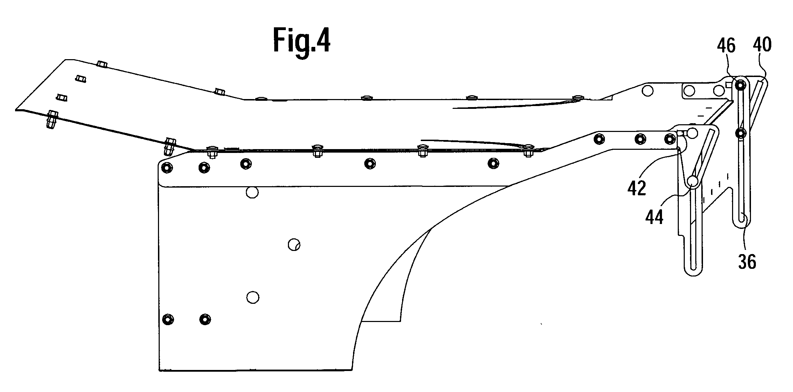

Die Stellung nach Figur 4 entspricht in gewisser Hinsicht der aus Figur 2, wobei sich der Abweiser 20 nun aber ganz unten befindet und voll in den Gutstrom hineinragt. In diesem Fall liegen die Stellelemente 46 an dem oberen Ende des ersten Schlitzes 36 an. Die Stellung der Stellelemente 44, 46 in dem zweiten und dem dritten Schlitz 40, 42 entspricht der aus Figur 2.

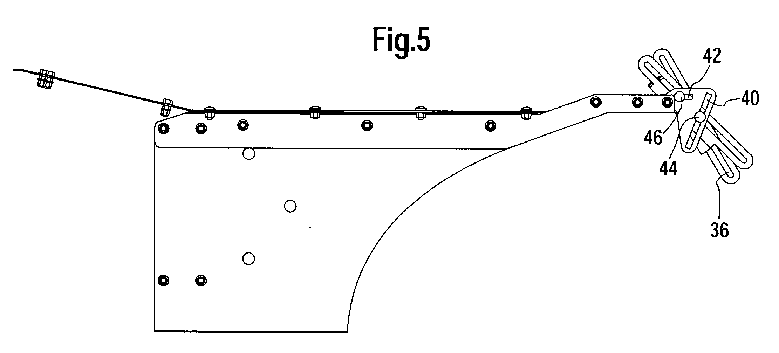

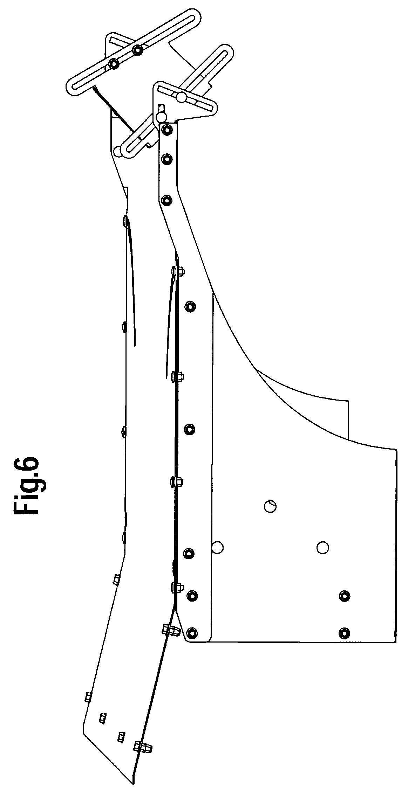

Die Figuren 5 und 6 demonstrieren eine Stellung des Abweisers 20, in der dieser, und zwar insbesondere dessen Flächenelement 30, tordiert ist. Während die Feststellelemente 44, 46 in dem ersten Schlitz 36 in dessen Mittenbereich angeordnet sind, nehmen sie in dem zweiten und dem dritten Schlitz 40, 42 unterschiedliche Stellungen ein, woraus sich die Torsion ergibt.

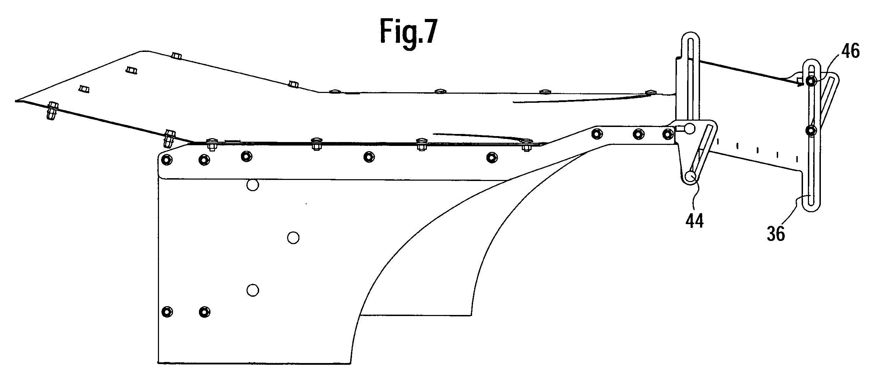

Schließlich ergibt sich aus Figur 7 eine Stellung des Abweisers 20, in der dieser schräg steht, sodaß dessen linke Seite einen größeren Abstand zum Boden einnimmt als seine rechte, wodurch sich eine Ablenkung des Gutstroms zu einer Seite hin ergibt. In der etwas übertriebenen Darstellung befindet sich das Feststellelement 44 einerseits an einem Ende des Schlitzes 36 und das Feststellelement 46 andererseits an dem anderen Ende des Schlitzes 36 auf der gegenüberliegenden Seite. Eine solche Ausrichtung ist unter anderem auch deshalb möglich, weil die Schlitzträger 32 und 38 nachgeben können.

## Patentansprüche

1. Mäh- und/oder Aufbereitungsgerät (10) mit einem Auslassleitelement (24) und einem Abweiser (20), der in einen von dem Auslassleitelement (24) begrenzten Auslasskanal (34) einbringbar ist, **dadurch gekennzeichnet, daß** seitens des Abweisers (20) und des Auslassleitelements (24) je Feststellbereich wenigstens ein Schlitz (36, 40, 42) vorgesehen ist, durch den sich ein Feststellelement (44, 46) erstreckt.

2. Mäh- und/oder Aufbereitungsgerät nach Anspruch 1, **dadurch gekennzeichnet, daß** seitens des Auslassleitelements (24) oder des Abweisers (20) je Befestigungsbereich ein zweiter Schlitz (40, 42) mit einem Feststellelement (44, 46) vorgesehen ist.

3. Mäh- und/oder Aufbereitungsgerät nach Anspruch 1 oder 2, **dadurch gekennzeichnet, daß** wenigstens ein Schlitz (36, 40, 42) eine glatte oder mit Ausnehmungen versehene Begrenzung aufweist.

4. Mäh- und/oder Aufbereitungsgerät nach einem oder mehreren der vorherigen Ansprüche, **dadurch gekennzeichnet, daß** die beiden Schlitze (36, 40, 42) seitens des Auslassleitelements (24) oder des Abweisers (20) rechtwinklig oder im wesentlichen rechtwinklig zueinander verlaufen.

5. Mäh- und/oder Aufbereitungsgerät nach einem oder mehreren der vorherigen Ansprüche, **dadurch gekennzeichnet, daß** die Schlitze (36, 40, 42) unterschiedlich lange ausgebildet sind.

6. Mäh- und/oder Aufbereitungsgerät nach einem oder mehreren der vorherigen Ansprüche, **dadurch gekennzeichnet, daß** zu jeder Seite des Auslassleitelements (24) ein im wesentlichen dreieckiger, insbesondere plattenartiger Schlitzträger (38) vorgesehen ist, entlang dessen zweier Schenkel sich jeweils ein Schlitz (40, 42) erstreckt.

7. Mäh- und/oder Aufbereitungsgerät nach einem oder mehreren der vorherigen Ansprüche, **dadurch gekennzeichnet, daß** der Abweiser (20) ein Flächenelement (30) aufweist, an dessen sich gegenüberliegenden Endbereichen jeweils ein das Flächenelement (30) überragender Schlitzträger (32) vorgesehen ist.

8. Mäh- und/oder Aufbereitungsgerät nach einem oder mehreren der vorherigen Ansprüche, **dadurch gekennzeichnet, daß** der Abweiser (20) mit dem Flächenelement (30) und den Schlitzträgern (32) aus einem einzigen entsprechend gekanteten und ausgesparten Blech besteht.
